# EUROPEAN PATENT SPECIFICATION

(11) **EP 2 638 382 B1**
(45) Date of publication and mention of the grant of the patent: **03.01.2018**
(21) Application number: 11785052.9
(22) Date of filing: 08.11.2011
(51) Int. Cl.: G01N 1/36

(54) **WASTE WAX TRAY**
SCHALE FÜR WACHSRESTE
PLATEAU POUR CIRE USÉE

(30) Priority: 08.11.2010 GB 201018862
(43) Date of publication of application: 18.09.2013
(73) Proprietor: Thermo Shandon Ltd, Manor Park Runcorn Cheshire WA7 1TA (GB)
(72) Inventor: LEIGHTON, Christopher James, Cheshire CH2 4PX (GB); DAVIES, Robert, North Wales CH7 5DZ (GB)
(74) Representative: Hackney, Nigel John
(86) International application number: PCT/GB2011/001568
(87) International publication number: WO 2012/063014

(56) References cited:
- GB-A- 577 267
- US-A- 5 665 398
- US-A1- 2005 100 981
- Unknown: "Shandon Excelsior ES Operator Guide -English", , 1 January 2006 (2006-01-01), pages 1-131, XP055303305, Retrieved from the Internet: URL:http://tools.thermofisher.com/content/ sfs/manuals/Excelsior ES Operator Guide A78410120_03.pdf [retrieved on 2016-09-16]

## Description

The present invention relates to a wax tray for use with a pathology apparatus and for collecting liquid wax from such apparatus. In particular, the present invention relates to a disposable wax tray, which allows for convenient and safe disposal of wax collected from such a machine.

Pathology apparatuses can be used to prepare for analysing, biological samples such as tissue (histology) samples. One type of pathology apparatus used to prepare such samples is the tissue processor. In such an apparatus, tissue samples such as biopsy samples are impregnated with wax, usually paraffin wax, so that they can be sliced and manipulated with greater ease. For example, the tissue processor is used to automatically preserve, dehydrate and wax impregnate histology (tissue) samples. A series of reagent types are sequentially drawn into a reaction vessel containing the tissue samples. These reagents act to 'fix' the tissue (by chemically stabilizing the tissue and preventing further deterioration), to dehydrate the tissue (by replacing the majority of the water with alcohol), to clear the tissue (by replacing the alcohol with an organic solvent e.g. xylene), and to infiltrate the tissue with liquid wax.

The process produces a chemically stable tissue sample with its water content replaced with liquid paraffin wax. When removed from the tissue processor and cooled, the wax infiltrated tissue sample is rigidly supported to allow very thin (a few micrometers) sections to be taken to allow diagnostic activities to occur.

As the process is one of replacing the liquid content of the tissue sample with other liquids, the used liquids slowly become contaminated with the previous liquid in the process cycle - for example, the liquid wax infiltration reagent becomes contaminated with the last organic clearing solvent used. To overcome this contamination the reagents are periodically discarded from the tissue processor and replaced with fresh ones.

In the process of producing wax embedded tissue samples, waste wax is produced in the form of hot liquid wax. Not only can the hot liquid wax be dangerous to handle as a consequence of its temperature, but as it may contain biological material - which is often pathological biological material - as well as solvent contamination it must be handled and disposed of with care to avoid accidental contamination/infection of the user. The present inventors have appreciated that it is important to make the customer interaction with this wax removal process as easy and risk free as possible.

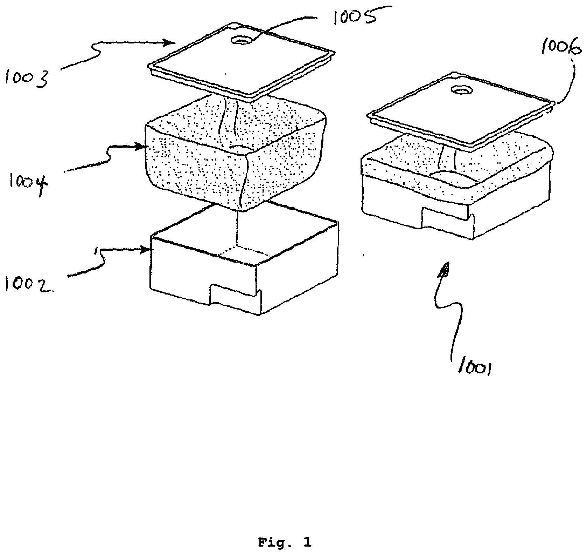

At present, waste wax is often deposited by pathology apparatuses, such as a tissue processor, into a (waste) wax tray as shown in Fig. 1. Such a conventional waste wax tray is often provided in the form of a reusable, i.e. non-disposable, tray 1001 having a moulded plastic base portion 1002 and a lid portion 1003 which fits on the base portion.

Typically, the user is expected to place a disposable polythene bag 1004 into the base portion to act as a liner and to receive and retain the discarded waste (liquid) wax. After the required processing, the wax waste tray is removed from the apparatus, and either: the user allows the wax to solidify in the disposable polythene bag before removing both the bag and the body of solidified wax as a 'block' for disposal; or, the user pours the (hot) liquid wax from the disposable bag into another container where it is allowed to solidify for subsequent disposal.

In either event, the customer then fits a new empty polythene bag into the same tray ready for the next time wax waste needs to be collected from the apparatus.

However, in the first instance, as the wax may take a long time to solidify, the user may not be able to refit the wax tray with a new empty polythene bag within a convenient timescale. Furthermore, in having to remove the 'block' of solidified wax and polythene bag from the wax tray for disposal, the user risks being exposed to potentially biologically hazardous and solvent contaminated material.

In the second instance, there is a significant danger that the user may be burnt when removing the polythene bag full of hot liquid wax from the tray. The danger of potential exposure to biologically hazardous and solvent contaminated material also exists in this instance.

The present invention has been devised in view of at least these problems.

US 2005/0100981 discloses a method and an arrangement for preparing a biological specimen where the biological specimen prior to being examined is dried, embedded in wax and optionally sliced, and where the biological specimen is placed in a container with a lid/clamping member that is closed, in which it is retained by a biasing element, the specimen remaining in the same closed container/lid during the subsequent drying and embedment operations.

US 5,665,398 discloses a system for providing an embedded tissue specimen subsequent to fluid treatment of the specimen and preparatory to histological examination.

In a first aspect, the present invention provides a pathology apparatus as set out in claim 1. Further aspects of the present invention are set out in the remaining claims.

The wax tray can be removed from the apparatus before or after the wax has solidified, but advantageously once the wax has solidified the tray is locked shut by virtue of the engagement of the holding means with the solidified wax. The solidified wax and disposable wax tray can then be disposed of together in a safe and secure manner. Further, the present invention advantageously provides for the solidified wax to be retained in a substantially sealed receptacle, thereby minimizing the risk of the user being exposed to biologically hazardous and solvent contaminated material which may be contained in the wax.

A wax tray is a dedicated receptacle adapted for use with a pathology apparatus, e.g. a (enclosed) tissue processor. It is adapted to accept liquid waste paraffin wax discarded by the pathology apparatus. The tray must be able to withstand being in contact with liquid wax up to a temperature of around 65°C. The wax which it is adapted to retain may be paraffin wax.
The lid portion may include a lip which extends around and outwardly of an upper rim of the base portion, and (preferably) also includes a ridge which extends around and inwardly of the upper rim of the base portion.
The ridge advantageously provides enhanced structural rigidity to the tray, which is of high importance given that the wax tray may be filled with hot molten wax, and that it is intended for the wax tray to be disposable and thus be made of thin, light and inexpensive material(s) which in itself/themselves may only provide relatively little structural rigidity.
Preferably, the lip (which may be provided without the additional ridge) is engageable with the upper rim of the base portion to releasably lock the lid portion and the base portion together, e.g. so that the tray can be manoeuvered safely whilst containing hot liquid wax. Preferably, the upper rim of the base portion is adapted to be releasably lockably engageable with the lip of the lid portion.

Preferably, the lip may include a flange which extends around and outwardly of the lip. The upper rim of the base portion may be adapted to engage, and preferably to conform, with the ridge and/or lip of the lid portion, e.g. so that the base portion and lid portion are mutually releasably lockable (to one another).

The base portion and lid portion may be manufactured as a single component such that the lid portion remains openably attached to the base portion at all times (e.g. prior to the tray being filled with wax).

Advantageously, the lid portion and base portion can then not be completely separated, which could otherwise undesirably lead to a disruption in the operation of the pathology apparatus whilst a suitable lid is sought. It also adds an additional advantageous safety feature that there is always available a lid portion for (substantially) sealing a base portion full of waste wax, thereby providing a barrier against burns and against any biologically hazardous and solvent contaminated material contained in the wax.

The base portion and lid portion may be made from a polyester (PET) with an average wall section thickness of less than approximately 1mm. Accordingly, the wax tray can be made relatively inexpensively, meaning that consumers are more likely to consider a wax tray according to the present invention to be disposable. Furthermore, the impact on waste disposal is kept advantageously low due to the low weight of the material used.

Preferably, the tray defines an enclosure for retaining collected wax, the holding means being arrangeable to extend from the lid portion into the enclosure. Thus, in use, the liquid wax will solidify and engage with the holding means and maintain the lid portion in place relative to the base portion.

Preferably, the lid portion is formed to include one or more apertures, through which wax is receivable by the base portion and preferably at least one of the one or more apertures is provided within the recess. (Solidified) wax held in the recess, which is connected through the aperture to (solidified) wax in the base portion, cooperate to hold the lid portion shut. Preferably, at least one of the one or more apertures is provided in a floor of the recess.

Advantageously, this helps to ensure that (whilst there is still available space in the base portion to receive wax) any liquid wax in the recess is funneled to the base portion, and does not reside in the recess long enough to solidify and prematurely block the aperture.

Indeed, preferably, the recess is arranged to provide means for guiding liquid wax to the one or more apertures, so as to help the funneling process.

Preferably, a portion of the recess forms a channel, the tray including a respective aperture at each end of the channel. Thus, even if the wax tray is not level during use, wax deposited into the recess should be suitably funneled into the base portion. Furthermore, should one of the apertures be undesirably blocked, e.g. by premature solidification of wax, the present invention provides an alternative means by which the wax is able to pass into the base portion.

Preferably, a single body of solidified collected wax is formable to have elements respectively located in the base portion and the recess, the elements being connected through said aperture to hold the lid portion in place relative to the base portion.

Preferably, the tray includes escape means for allowing fluid, e.g. gas, in particular air, contained within the tray to be displaced therefrom by collected wax. Advantageously, this means that when the level of the (liquid) wax in the base portion reaches the aperture formed in the lid portion (preferably formed in the recess), a "head" of wax is not formed in the recess and all the available volume of the tray can be used to receive waste wax. Thus, preferably, the escape means include a further aperture, preferably formed in the lid portion, even more preferably formed in a region of the lid portion other than the recess, through which gas, e.g. air, can be displaced from within the tray.

Preferably, the lid portion includes a lip which extends around and outwardly of an upper rim of the base portion, and/or includes a ridge which extends around and inwardly of the upper rim of the base portion. Yet more preferably, the lip is engageable with the upper rim of the base portion to releasably lock the lid portion and the base portion together.

Preferably, the base portion and lid portion are manufactured as a single component such that the lid portion remains openably attached to the base portion at all times.

Preferably, the lid portion and base portion are mutually attached by hinging means which allow the lid portion to remain openably attached to the base portion at all times (e.g. prior to use, and thus prior to the holding means being engaged by (solidified) wax to hold the lid shut), thereby providing access to the interior of the wax tray.

Accordingly, preferably, the lid portion and base portion are mutually attached by hinging means which allow the lid portion to remain openably attached to the base portion. Preferably, the means includes a flexible member formed integrally with the lid portion and/or the base portion, thereby resulting in a wax tray which can be inexpensively manufactured as a single component. Indeed, preferably, the base portion, the lid portion and the hinging means are all formed integrally of the same material, thereby resulting in a wax tray which can be inexpensively manufactured as a single component.

Preferably, the hinging means, the base portion and the lid portion are all formed of a polyester (PET)or a polypropylene (PP), for example with an average wall section thickness of less than approximately 1mm. Preferably, they are formed to have an average wall section thickness of greater than approximately 0.6mm.

Accordingly, the or each side wall of the base portion is preferably shaped to resist deformation in response to application of a compressive force applied between the upper rim and floor of the base portion. More preferably, the or each side wall of the base portion includes one or more ribs for resisting deformation in response to application of a compressive force applied between the upper rim and floor of the base portion. More preferably, the or each rib is formed to extend inwardly of the sidewall of the base portion. The or each rib may be provided in the form of an elongate depression in the sidewall (s) . Advantageously, this also has the effect of increasing the surface area of the base portion of the wax tray, which results in more rapid cooling, and thus more rapid solidification, of liquid wax contained in the tray.

In a preferred embodiment, the base portion includes a handle to facilitate easier and safer manipulation of the wax tray.

The present invention will now be described in more detail by way of example only, with reference to the accompanying figures, in which:
Fig. 1 shows a conventional wax tray for receiving waste wax from a pathology apparatus;
Fig. 2 shows a perspective view of a wax tray according to the present invention;
Fig. 3 shows a plan view of a wax tray according to the present invention;
Fig. 4 shows a cross-section of a wax tray according to the present invention;

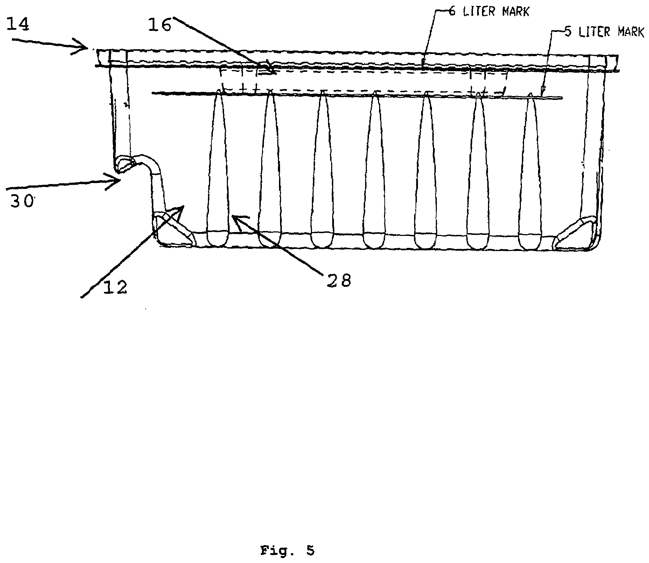

Fig. 5 shows a side view of a wax tray according to the present invention;
Fig. 6 shows a cross-section of engagement means for holding the lid portion and base portion releasably locked together; and
Fig. 7 shows a cross-section of engagement means for holding the lid portion and base portion releasably locked together

In Fig. 1 there is shown a conventional waste wax tray 1001, which is often provided in the form of a reusable, i.e. non-disposable, tray having a moulded plastic base portion 1002 and a moulded plastic lid portion 1003, which fits on the base portion. The lid portion 1003 includes an aperture 1005 through which liquid wax can enter the base portion 1002.

Typically, the user is expected to place a disposable polythene bag 1004 (to act as a liner) into the base portion. Waste wax (often hot liquid wax) from a pathology apparatus is received by the tray and retained in the bag which lines the base portion 1002.

As can be seen, typically, the lid includes an outwardly projecting flange 1006 at its perimeter for resting on the upper rim of the base portion 1002. The presence of the flange can help to keep the disposable bag 1004 in place - the upper rim of the base portion 1002 and the flange 1006 cooperate to pinch the bag 1004 to hold it in place.

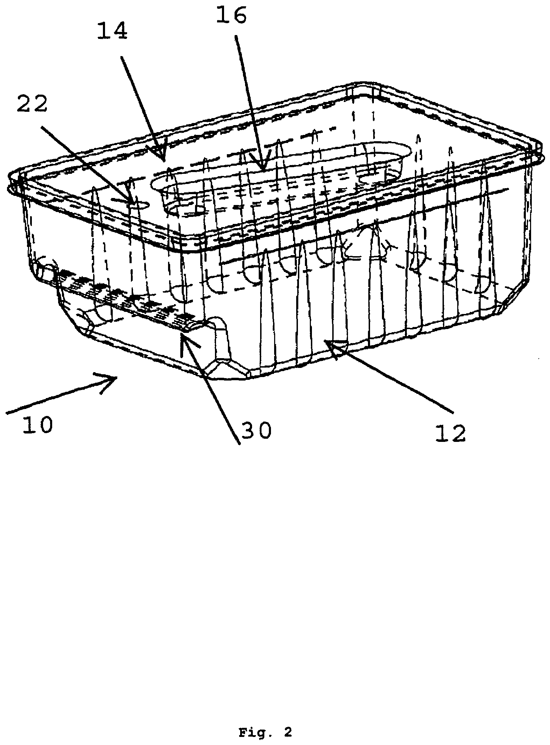

Fig. 2 provides a perspective view of an example of a wax tray 10 according to the present invention, which includes a base portion 12 and a lid portion 14. The lid portion is preferably openable, to provide access (prior to use) to the interior of the tray.

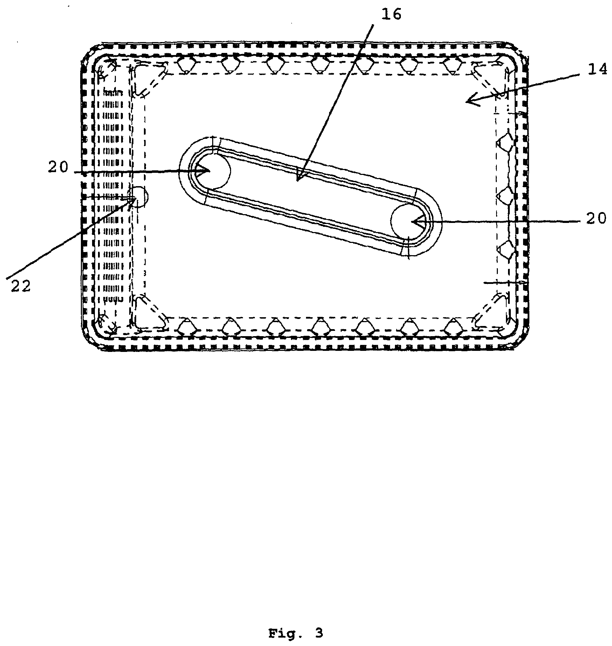

The wax tray includes holding means preferably in the form of a recess 16, or depression, formed in the lid portion 14. A preferred configuration of the recess 16 is shown in the plan view of the lid portion 14 given in Fig. 3. As can be seen, the lid portion 14 preferably includes (one or) two (or more) apertures 20, preferably formed in the recess 16. It is envisaged that, in use, waste hot liquid wax will be deposited into the recess 16 by a pathology apparatus, such as a tissue processor, and will be caused to flow to, and then through, aperture(s) 20 into the base portion 12. When in the base portion 12, the hot liquid wax is allowed to cool and solidify. The pathology apparatus and tray may be mutually arranged such that waste wax is deposited directly through aperture(s) 20 without the need for the wax to flow in the recess.

As can be seen from Fig. 2, the recess preferably extends into the interior of the tray 10, i.e. into the wax holding space provided by the tray 10. In the example shown the wax holding space is largely defined by the base portion 12.

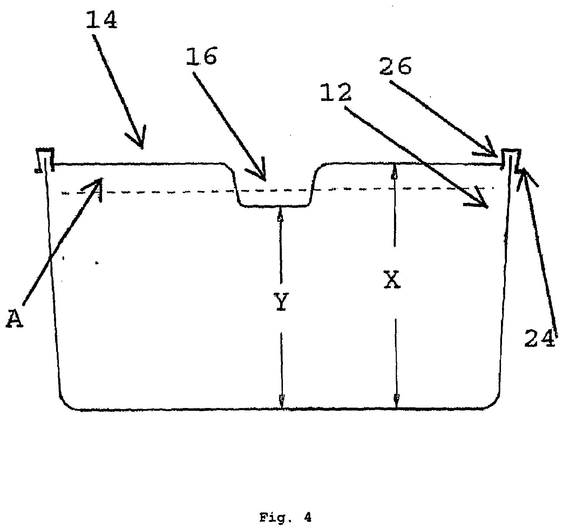

As can be seen in Fig. 4, the height of the lid portion from the floor of the base portion is X, whereas the height of the floor of the recess from the floor of the base portion is Y, where Y < X.

Therefore, in use, the level of the waste wax in the base portion 12 will rise as more waste wax is deposited into it. When the wax level reaches height Y, at least some of the wax deposited in the recess will remain in the recess - this is indicated by the dashed line shown in Fig. 4. When left to cool and solidify, a single body of solid wax is formed, which has a first element located in the recess 16 and a second element located in the base portion 12, where the first and second elements are joined to one another through the aperture(s) 20, thereby effectively locking the lid portion 14 to the base portion 12.

In other words, in general terms, the holding means according to the present invention is configured to extend from the lid portion 14 such that it contacts wax retained by the tray 10 (preferably the base portion 12) in such a way as to be embedded in the wax when the wax solidifies. Thus, in an aspect of the present invention, the embedded holding means acts as anchor holding the lid portion 14 in place.

Accordingly, whilst the present invention is described above to have holding means in the form of a recess formed in the lid portion 14 which extends into the interior (wax receiving) space of the tray 10, the present invention should not be considered as being limited to this embodiment. Other configurations are envisaged. For example, the holding means may be a suitably shaped member projecting from the lid portion into the wax receiving space of the wax tray which does not result in the presence of a recess or depression in the lid portion 14. The projecting member may be provided in the form of a generally T-shaped projection or a J-shaped (hook shaped) projection. The projecting member may be supplied with one or more ribs extending (generally) laterally outwards of the member. The projecting member may be threaded. A plurality of projecting members may be provided as the holding means.

Escape means are preferably provided in the tray, e.g. in the lid portion, preferably in the form of a further aperture 22. As the level of the wax in the base portion rises to height Y, if the lid portion 14 forms a good (e.g. airtight) seal at the upper rim of the base portion 12, then there is a risk that a "head" of liquid wax will form in the recess due to the air (or other gas or fluid) present in region "A" shown in Fig. 4 resisting compression. Thus, the present inventors propose optionally to include means to allow the air to escape, thereby allowing the level of the wax in the base portion to continue to rise, and to help prevent a "head" of wax forming in the recess. Accordingly, the level of waste wax in the tray can readily reach height X, optimizing the use of the available space.

It is intended that the tray be manufactured as a single component, whereby the base portion 12 and the lid portion 14 are coupled such that the lid portion is, e.g. prior to the tray being filled with wax, openably attached to the base portion. Accordingly, the lid portion 14 is preferably coupled to the base portion 12 by a hinging means, e.g. a hinge (not shown in the figures). Preferably, the lid portion, the hinging means and the base portion are all integrally formed. Preferably they are all formed of the same material.

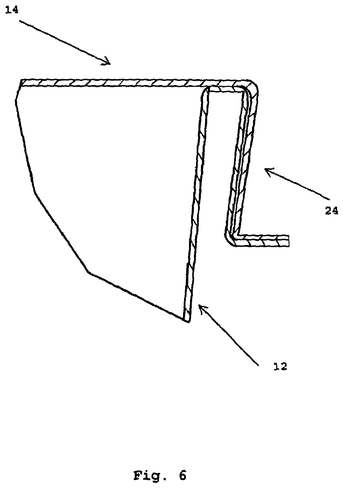

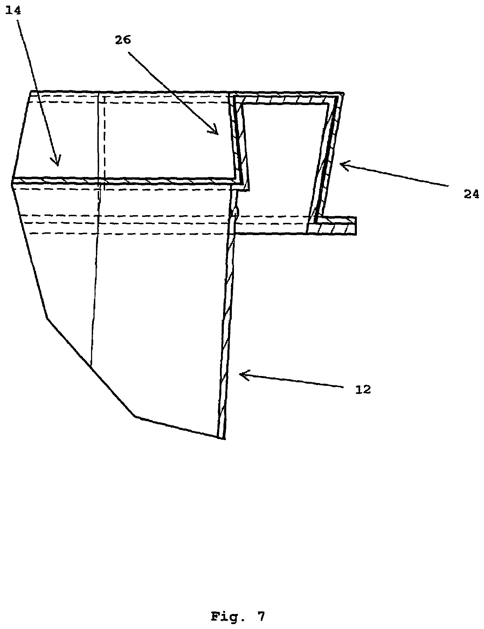

As shown in Figs. 6 and 7, the lid portion is preferably provided with a lip 24 which extends around and outwardly of an upper rim of the base portion 12. Preferably, the lip is configured to engage with the upper rim of the base portion 12 to form a releasably lockable fit between the base and lid portions. Optionally, the upper rim of the base portion may be shaped suitably so as to be engageable with the lip 24 to form the releasably lockable fit between the base and lid portions.

Preferably, as shown in Fig. 7 the lid portion also includes a ridge 26 which extends around and inwardly of the upper rim of the base portion, e.g. when the lid portion is in the closed position - the ridge thereby providing additional structural rigidity to the lid portion 14, and preferably to the tray 10 as a whole by helping to prevent the sidewall of the base portion 12 from buckling inwards.

It is envisaged that users will see a wax tray according to the present invention as disposable. Therefore, preferably, the base portion and/or the lid portion (and/or the hinging means if provided) are made from a material which is resistant to the operating temperatures and to the processing solvents used by the pathology apparatus, e.g. the tissue processor. Preferably, the base portion and/or the lid portion (and/or the hinging means if provided) are made from polyester (PET) and/or polypropylene (PP) so as to minimize the manufacturing costs, thereby helping to produce an inexpensive item that a user will be content to use only once before disposal.

Preferably, the tray is formed to have an average wall section thickness of less than approximately 1mm, thereby keeping the manufacturing costs low, the transportation costs low and to try to minimize the environmental impact due to the disposable nature of the product. Preferably, to provide sufficient structural rigidity to the structure, the tray is provided with an average wall thickness of no less than approximately 0.4 mm, more preferably of no less than approximately 0.5 mm, or even more preferably of approximately 0.6mm. Preferably, the average wall thickness is approximately 0.6mm. Preferably, a wax tray according to the present invention has a total mass of no less than 0.075kg when empty, more preferably of no less than 0.10kg when empty, or even more preferably of no less than approximately 0.15kg when empty. It is preferred that a wax tray according to the present invention has a total mass of approximately 0.15kg when empty.

Preferably, to further enhance the structural rigidity of the wax tray 10, one or more ribs 28 are provided. Preferably, the rib(s) 28 are arranged to help the tray withstand compressive forces applied between the floor of the base portion 12 and the lid portion 14. Preferably, the rib(s) 28 are arranged to help the sidewalls of the base portion 12 resist buckling inwardly and/or outwardly. Preferably, the rib(s) 28 are arranged to extend at least partway between the floor of the base portion 12 and the upper rim of the base portion 12. Preferably, the rib(s) project inwardly (or outwardly) of the sidewall of the base portion 12. The rib(s) 28 may be formed as a depression in the sidewall of the base portion 12. The rib(s) 28 not only provide additional structural rigidity, but also can serve to increase the overall surface area of the base portion 12. This can assist in increasing the rate at which liquid wax retained by the tray 10 cools and solidifies. This is advantageous, for example, where a user is not permitted to move the wax tray whilst the wax is still hot enough to remain in the liquid state, because it can shorten the time it takes for the wax to solidify.
Preferably, in order to facilitate safer manipulation of the wax tray 10, a handle 30 is provided, preferably on the base portion 12. The handle 30 may be provided in the form of a lipped recess in a sidewall of e.g. the base portion, which is suitable for receiving at least a portion of one or more fingers of the user.
To assist the user, wax level indicators may be provided on the wax tray, preferably on the base portion, indicating to the user the volume of wax retained by the tray. It is envisaged that the wax tray will hold up to 5 or 6 litres of wax. The tray may hold more wax, e.g. up to 10 litres of wax.

## Claims

1. A pathology apparatus for impregnating biological tissue samples with wax by replacing the water content in the tissue sample with liquid wax, the apparatus including a wax tray (10), wherein the wax tray is configured to collect waste hot liquid wax from the pathology apparatus, the tray including a base portion (12) for receipt of wax and a lid portion (14) which fits on top of the base portion, the apparatus being **characterised in that** the wax tray is capable of holding 5 litres of wax or more; and
the lid portion includes wax holding means (16) which extend such that in use they contact wax received in the base portion and such that when wax in the base portion solidifies the solid wax will lock the lid portion to the base portion.

2. A pathology apparatus according to claim 1, wherein the wax tray defines an enclosure for retaining collected wax, the holding means being arrangeable to extend from the lid portion into the enclosure.

3. A pathology apparatus according to claim 1 or 2, wherein the lid portion is formed to include one or more apertures (20), through which wax is receivable by the base portion.

4. A pathology apparatus according to claim 1 or 2, wherein the holding means provide a recess (16) in the external surface of the lid portion.

5. A pathology apparatus according to claim 4, wherein the lid portion is formed to include one or more apertures, through which wax is receivable by the base portion, and wherein at least one of the one or more apertures is provided within the recess.

6. A pathology apparatus according to claim 5, wherein at least one of the one or more apertures is provided in a floor of the recess.

7. A pathology apparatus according to any one of claims 5 to 6, wherein the recess provides means for guiding liquid wax to the one or more apertures.

8. A pathology apparatus according to claim 7, wherein a portion of the recess forms a channel, the wax tray including a respective aperture at each end of the channel.

9. A pathology apparatus according to any one of claims 5 to 8, wherein in use, a single body of solidified collected wax is formable to have elements respectively located in the base portion and the recess, the elements being connected through said aperture to hold the lid portion in place relative to the base portion.

10. A pathology apparatus according to any one of the preceding claims, wherein the wax tray includes escape means (22) for allowing gas contained within the wax tray to be displaced therefrom by collected wax.

11. A pathology apparatus according to claim 10, wherein the escape means include a further aperture (22).

12. A pathology apparatus according to claim 10 or 11, wherein the lid portion includes the escape means.

13. A pathology apparatus according to claim 12 as dependent on claim 4, wherein the escape means is not located within the recess.

14. A pathology apparatus according to any one of the preceding claims, wherein the lid portion includes a lip (24) which extends around and outwardly of an upper rim of the base portion, and/or includes a ridge which extends around and inwardly of the upper rim of the base portion.

15. A method of using a pathology apparatus according to any one of claims 1 to 14 including:
using the wax tray (10) to collect waste hot liquid wax from the pathology apparatus;
wherein the wax holding means (16) included in the lid portion (14) contacts wax received in the base portion;
wherein the wax in the base portion solidifies such that the solid wax locks the lid portion to the base portion.

## Patentansprüche

1. Vorrichtung für pathologische Zwecke zum Imprägnieren von biologischen Gewebeproben mit Wachs durch Ersetzen des Wassergehalts in der Gewebeprobe durch flüssiges Wachs, wobei die Vorrichtung eine Wachsschale (10) umfasst, worin die Wachsschale konfiguriert ist, überschüssiges heißes flüssiges Wachs aus der Vorrichtung für pathologische Zwecke aufzufangen, wobei die Schale einen Basisabschnitt (12) für das Aufnehmen von Wachs und einen Deckelabschnitt (14), der auf die Oberseite des Basisabschnitts passt, umfasst, wobei die Vorrichtung **dadurch gekennzeichnet ist, dass**
die Wachsschale geeignet ist, 5 Liter Wachs oder mehr aufzunehmen; und
der Deckelabschnitt Wachsaufnahmemittel (16) umfasst, die sich so erstrecken, dass sie bei Verwendung das im Basisabschnitt aufgenommene Wachs berühren und so, dass, wenn sich Wachs im Basisabschnitt verfestigt, das feste Wachs den Deckelabschnitt am Basisabschnitt verriegeln wird.

2. Vorrichtung für pathologische Zwecke gemäß Anspruch 1, worin die Wachsschale ein Gehäuse zum Fixieren von aufgefangenem Wachs definiert, wobei die Aufnahmemittel so anordenbar sind, dass sie sich vom Deckelabschnitt in das Gehäuse hinein erstrecken.

3. Vorrichtung für pathologische Zwecke gemäß Anspruch 1 oder 2, worin der Deckelabschnitt so ausgebildet ist, dass er eine oder mehrere Öffnungen (20) umfasst, durch welche das Wachs durch den Basisabschnitt aufnehmbar ist.

4. Vorrichtung für pathologische Zwecke gemäß Anspruch 1 oder 2, worin die Aufnahmemittel eine Aussparung (16) in der äußeren Oberfläche des Deckelabschnitts vorsehen.

5. Vorrichtung für pathologische Zwecke gemäß Anspruch 4, worin der Deckelabschnitt so ausgebildet ist, dass er eine oder mehrere Öffnungen umfasst, durch welche das Wachs durch den Basisabschnitt aufnehmbar ist und worin mindestens eine der einen oder der mehreren Öffnungen innerhalb der Aussparung vorgesehen ist.

6. Vorrichtung für pathologische Zwecke gemäß Anspruch 5, worin mindestens eine der einen oder der mehreren Öffnungen in einem Boden der Aussparung vorgesehen ist.

7. Vorrichtung für pathologische Zwecke gemäß einem der Ansprüche 5 bis 6, worin die Aussparung Mittel für das Führen von flüssigem Wachs zu der einen oder den mehreren Öffnungen vorsieht.

8. Vorrichtung für pathologische Zwecke gemäß Anspruch 7, worin ein Abschnitt der Aussparung einen Kanal bildet, wobei die Wachsschale eine entsprechende Öffnung an jedem Ende des Kanals umfasst.

9. Vorrichtung für pathologische Zwecke gemäß einem der Ansprüche 5 bis 8, worin ein einzelner Körper aus festgewordenem aufgefangenen Wachs bei Verwendung formbar ist, um Elemente, die jeweils im Basisabschnitt bzw. in der Aussparung angeordnet sind, aufzuweisen, wobei die Elemente durch die Öffnung verbunden sind, um den Deckelabschnitt in Bezug auf den Basisabschnitt zu fixieren.

10. Vorrichtung für pathologische Zwecke gemäß einem der vorangegangenen Ansprüche, worin die Wachsschale Entweichmittel (22) umfasst, um zu ermöglichen, dass das in der Wachsschale enthaltene Gas durch aufgefangenes Wachs aus dieser verlagert wird.

11. Vorrichtung für pathologische Zwecke gemäß Anspruch 10, worin die Entweichmittel eine weitere Öffnung (22) umfassen.

12. Vorrichtung für pathologische Zwecke gemäß Anspruch 10 oder 11, worin der Deckelabschnitt die Entweichmittel umfasst.

13. Vorrichtung für pathologische Zwecke gemäß Anspruch 12 in Abhängigkeit von Anspruch 4, worin das Entweichmittel nicht innerhalb der Aussparung angeordnet ist.

14. Vorrichtung für pathologische Zwecke gemäß einem der vorangegangenen Ansprüche, worin der Deckelabschnitt eine Lippe (24) umfasst, die sich um einen oberen Rand des Basisabschnitts herum und außerhalb von diesem erstreckt, und/oder eine Rippe umfasst, die sich um den oberen Rand des Basisabschnitts herum und innerhalb von diesem erstreckt.

15. Verfahren zur Anwendung einer Vorrichtung für pathologische Zwecke gemäß einem der Ansprüche 1 bis 14, umfassend:
Verwenden der Wachsschale (10) zum Auffangen von überschüssigem heißem flüssigen Wachs aus der Vorrichtung für pathologische Zwecke;
worin das im Deckelabschnitt (14) integrierte Wachsaufnahmemittel (16) das im Basisabschnitt aufgenommene Wachs berührt;
worin sich das Wachs im Basisabschnitt derart verfestigt, dass das feste Wachs den Deckelabschnitt am Basisabschnitt verriegelt.

## Revendications

1. Appareil de pathologie pour imprégner des échantillons de tissu biologique à l'aide de cire en remplaçant la teneur en eau dans l'échantillon de tissu par de la cire liquide, l'appareil comprenant un bac à cire (10), dans lequel le bac à cire est configuré pour collecter des déchets de cire liquide chaude provenant de l'appareil de pathologie, le bac comprenant une partie de base (12) pour recevoir la cire et une partie de couvercle (14) qui s'ajuste sur la partie supérieure de la base, l'appareil étant **caractérisé en ce que**
le bac à cire est capable de contenir 5 litres de cire ou plus ; et
la partie de couvercle comprend des moyens de maintien de cire (16) qui s'étendent de telle sorte, qu'en utilisation, ils entrent en contact avec la cire reçue dans la partie de base et de sorte que, lorsque la cire dans la partie de base se solidifie, la cire solide va verrouiller la partie de couvercle sur la partie de base.

2. Appareil de pathologie selon la revendication 1, dans lequel le bac à cire définit une enceinte pour retenir de la cire collectée, les moyens de maintien pouvant être disposés pour s'étendre depuis la partie de couvercle dans l'enceinte.

3. Appareil de pathologie selon la revendication 1 ou 2, dans lequel la partie de couvercle est formée pour inclure une ou plusieurs ouvertures (20), à travers lesquelles de la cire peut être reçue par la partie de base.

4. Appareil de pathologie selon la revendication 1 ou 2, dans lequel les moyens de maintien fournissent un évidement (16) dans la surface externe de la partie de couvercle.

5. Appareil de pathologie selon la revendication 4, dans lequel la partie de couvercle est formée pour inclure une ou plusieurs ouvertures, à travers lesquelles de la cire peut être reçue par la partie de base, et dans lequel au moins une des une ou plusieurs ouvertures est agencée à l'intérieur de l'évidement.

6. Appareil de pathologie selon la revendication 5, dans lequel au moins une des une ou plusieurs ouvertures est agencée dans un plancher de l'évidement.

7. Appareil de pathologie selon l'une quelconque des revendications 5 à 6, dans lequel l'évidement fournit des moyens pour guider la cire liquide vers les une ou plusieurs ouvertures.

8. Appareil de pathologie selon la revendication 7, dans lequel une partie de l'évidement forme un canal, le bac à cire comportant une ouverture respective à chaque extrémité du canal.

9. Appareil de pathologie selon l'une quelconque des revendications 5 à 8, dans lequel, en utilisation, un corps unique de cire collectée solidifiée peut être formé pour avoir des éléments situés respectivement dans la partie de base et l'évidement, les éléments étant connectés à travers ladite ouverture pour maintenir la partie de couvercle en place par rapport à la partie de base.

10. Appareil de pathologie selon l'une quelconque des revendications précédentes, dans lequel le bac à cire comprend des moyens d'échappement (22) pour permettre à un gaz contenu dans le bac à cire d'être déplacé de celui-ci par la cire collectée.

11. Appareil de pathologie selon la revendication 10, dans lequel les moyens d'échappement comportent une autre ouverture (22).

12. Appareil de pathologie selon la revendication 10 ou 11, dans lequel la partie de couvercle comprend les moyens d'échappement.

13. Appareil de pathologie selon la revendication 12 lorsque dépendante de la revendication 4, dans lequel les moyens d'échappement ne sont pas situés dans l'évidement.

14. Appareil de pathologie selon l'une quelconque des revendications précédentes, dans lequel la partie de couvercle comprend une lèvre (24) qui s'étend autour et vers l'extérieur d'un rebord supérieur de la partie de base, et/ou comprend une nervure qui s'étend autour et vers l'intérieur du rebord supérieur de la partie de base.

15. Procédé d'utilisation d'un appareil de pathologie selon l'une quelconque des revendications 1 à 14, comprenant :
l'utilisation du bac à cire (10) pour collecter des déchets de cire liquide chaude provenant de l'appareil de pathologie ;
dans lequel les moyens de maintien de cire (16) inclus dans la partie de couvercle (14) entrent en contact avec la cire reçue dans la partie de base ;
dans lequel la cire dans la partie de base se solidifie de sorte que la cire solide verrouille la partie de couvercle sur la partie de base.
